(19) Europäisches Patentamt / European Patent Office / Office européen des brevets

(11) **EP 4 184 400 A1**

(12) **EUROPEAN PATENT APPLICATION**

(43) Date of publication:
**24.05.2023 Bulletin 2023/21**

(21) Application number: **22208146.5**

(22) Date of filing: **17.11.2022**

(51) International Patent Classification (IPC):
**G06N 20/00** (2019.01)   **G06N 3/123** (2023.01)
**G06N 7/01** (2023.01)

(52) Cooperative Patent Classification (CPC):
**G06N 20/00;** G06N 3/123; G06N 7/01

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.11.2021 CN 202111381852**

(71) Applicant: **Beijing Baidu Netcom Science Technology Co., Ltd.
Beijing 100085 (CN)**

(72) Inventors:
• **LIU, Ji
Beijing, 100085 (CN)**
• **ZHOU, Chendi
Beijing, 100085 (CN)**
• **MA, Beichen
Beijing, 100085 (CN)**
• **ZHOU, Jiwen
Beijing, 100085 (CN)**
• **DOU, Dejing
Beijing, 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **FEDERATED LEARNING METHOD, FEDERATED LEARNING APPARATUS, ELECTRONIC DEVICE, AND STORAGE MEDIUM**

(57) The present disclosure provides a federated learning method, a federated learning apparatus, an electronic device, and a storage medium, which relate to a field of an artificial intelligence technology, in particular to fields of distributed data processing and deep learning technologies. A specific implementation solution includes: determining, for each task in at least one task in a current learning period, a set of target devices corresponding to the task according to respective scheduling information of a plurality of candidate devices corresponding to the task based on a scheduling policy, wherein the scheduling policy enables a time cost information and a device fairness evaluation information of completing the task in the current learning period to meet a predetermined condition; transmitting a global model corresponding to each task to a set of target devices corresponding to the task, so as to train the global model corresponding to each task by using the corresponding set of target devices; and updating the corresponding global model based on trained models in response to receiving the trained models from the corresponding set of target devices, so as to complete the current learning period.

FIG. 2

**Description**

TECHNICAL FIELD

The present disclosure relates to a field of an artificial intelligence technology, in particular to fields of distributed data processing and deep learning technologies, and specifically to a federated learning method, a federated learning apparatus, an electronic device, and a storage medium.

BACKGROUND

Federated learning (FL) is a distributed machine learning technology. Federated learning may perform collaborative training of models using multiple devices and their respective local data without exposing the local data of each device.

SUMMARY

The present disclosure provides a federated learning method, a federated learning apparatus, an electronic device, and a storage medium.

According to an aspect of the present disclosure, a federated learning method is provided, including: determining, for each task in at least one task in a current learning period, a set of target devices corresponding to the task according to respective scheduling information of a plurality of candidate devices corresponding to the task based on a scheduling policy, wherein the scheduling policy enables a time cost information and a device fairness evaluation information of completing the task in the current learning period to meet a predetermined condition; transmitting a global model corresponding to each task to the set of target devices corresponding to the task, so as to train the global model corresponding to each task by using the corresponding set of target devices; and updating the corresponding global model based on trained models in response to receiving the trained models from the corresponding set of target devices, so as to complete the current learning period.

According to another aspect of the present disclosure, a federated learning apparatus is provided, including: a first determination module configured to determine, for each task in at least one task in a current learning period, a set of target devices corresponding to the task according to respective scheduling information of a plurality of candidate devices corresponding to the task based on a scheduling policy, wherein the scheduling policy enables a time cost information and a device fairness evaluation information of completing the task in the current learning period to meet a predetermined condition; a transmission module configured to transmit a global model corresponding to each task to the set of target devices corresponding to the task, so as to train the global model corresponding to each task by using the corresponding set of target devices; and a training module configured to update the corresponding global model based on trained models in response to receiving the trained models from the corresponding set of target devices, so as to complete the current learning period.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method described above.

According to another aspect of the present disclosure, a non-transitory computer-readable storage medium having computer instructions therein is provided, and the computer instructions are configured to cause a computer to implement the method described above.

According to another aspect of the present disclosure, a computer program product containing a computer program is provided, and the computer program, when executed by a processor, causes the processor to implement the method described above.

It should be understood that content described in this section is not intended to identify key or important features in embodiments of the present disclosure, nor is it intended to limit the scope of the present disclosure. Other features of the present disclosure will be easily understood through the following description.

BRIEF DESCRIPTION OF THE DRAWINGS

The accompanying drawings are used for better understanding of the solution and do not constitute a limitation to the present disclosure, in which:

FIG. 1 schematically shows an exemplary system architecture to which a federated learning method and a federated learning apparatus may be applied according to embodiments of the present disclosure;

FIG. 2 schematically shows a flowchart of a federated learning method according to embodiments of the present disclosure;

FIG. 3 schematically shows an example schematic diagram of federated learning according to embodiments of the present disclosure;

FIG. 4 schematically shows an example schematic diagram of a target device training a global model according to embodiments of the present disclosure;

FIG. 5 schematically shows a block diagram of a federated learning apparatus according to embodiments of the present disclosure; and

FIG. 6 schematically shows a block diagram of an electronic device suitable for implementing a federated learning method according to embodiments of the present disclosure.

DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those ordinary skilled in the art should realize that various changes and modifications may be made to embodiments described herein without departing from the scope and spirit of the present disclosure. Likewise, for clarity and conciseness, descriptions of well-known functions and structures are omitted in the following description.

Researches of federated learning have attracted more and more attention. Improvements of convergence efficiency and convergence accuracy of federated learning are important aspects of researches of federated learning. However, most of researches focus on a performance of reaching a convergence of model in a case of a single task, and few researches were conducted for a performance of federated learning for multiple tasks. If training needs to be performed for multiple tasks, a main problem of researches is how to assign a set of target devices for each task, so that global models for all tasks converge faster and the convergence efficiency and the convergence accuracy meet requirements.

Therefore, embodiments of the present disclosure propose a federated learning solution. In a current learning period, for each task in at least one task, a set of target devices corresponding to the task is determined according to respective scheduling information of a plurality of candidate devices corresponding to the task based on a scheduling policy. The scheduling policy enables a time cost information and a device fairness evaluation information of completing the task in the current learning period to meet a predetermined condition. A global model corresponding to each task is transmitted to the set of target devices corresponding to the task, so as to train the global model corresponding to the task by using the corresponding set of target devices. The corresponding global model is updated based on trained models in response to receiving the trained models from the corresponding set of target devices, so as to complete the current learning period.

Each candidate device may store training data corresponding to each task. Therefore, data is associated with devices, and a data fairness may be represented by a device fairness. The time cost information may reflect a processing capacity of device. The scheduling policy is a policy that enables the time cost information and the device fairness evaluation information of completing the task of the current learning period to meet the predetermined condition, in which not only the processing capacity of device but also the data fairness are considered. Therefore, it is possible to properly determine a plurality of sets of target devices for a plurality of tasks respectively based on the scheduling policy. On this basis, the federated learning of a task is performed using the set of target devices corresponding to the task, so that the convergence accuracy and the convergence efficiency of global models for multiple tasks may be effectively ensured.

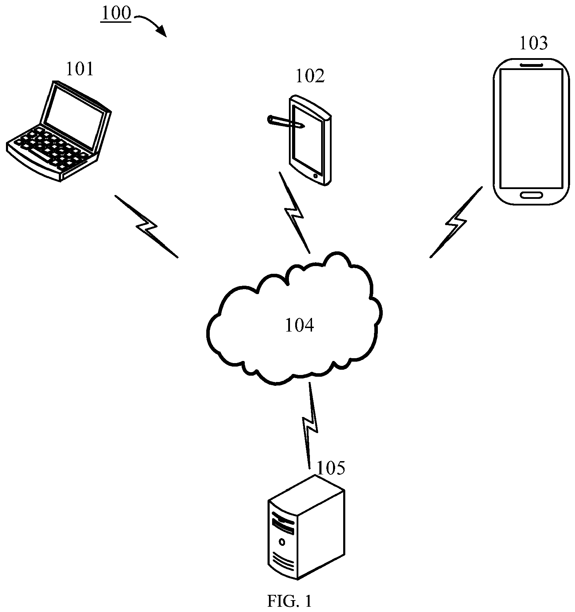

FIG. 1 schematically shows an exemplary system architecture to which a federated learning method and apparatus may be applied according to embodiments of the present disclosure.

It should be noted that FIG. 1 is only an example of the system architecture to which embodiments of the present disclosure may be applied to help those skilled in the art understand the technical content of the present disclosure, but it does not mean that embodiments of the present disclosure may not be applied to other devices, systems, environments or scenarios. For example, in other embodiments, an exemplary system architecture to which a federated learning method and apparatus may be applied may include a device, but the device may implement the federated learning method and apparatus provided by embodiments of the present disclosure without interacting with a server.

As shown in FIG. 1, a system architecture 100 according to such embodiments may include devices 101, 102 and 103, a network 104, and a server 105. The network 104 is a medium for providing a communication link between the devices 101, 102, 103 and the server 105. The network 104 may include various connection types, such as wired and/or wireless communication links, or the like.

The devices 101, 102 and 103 may be used by a user to interact with the server 105 through the network 104 to receive or send messages or the like. The devices 101, 102 and 103 may be installed with various communication client applications, such as knowledge reading applications, web browser applications, search applications, instant messaging tools, email clients and/or social platform software, etc. (for example only).

The devices 101, 102 and 103 may be various electronic devices having display screens and supporting web browsing, including but not limited to smart phones, tablet computers, laptop computers, desktop computers, or the like. In addition, the devices 101, 102 and 103 may be edge devices.

The server 105 may be various types of servers providing various services. For example, the server 105 may be a cloud server, also known as a cloud computing server or a cloud host, which is a host product in a cloud computing service system to solve shortcomings of difficult management and weak service scalability existing in an existing physical host and VPS (Virtual Private Server) service. The server 105 may also be a server of a distributed system or a server combined with a block-chain.

It should be noted that the federated learning method provided by embodiments of the present disclosure may generally be performed by the server 105. Accordingly, the federated learning apparatus provided by embodiments of the present disclosure may be generally provided in the server 105. The federated learning method provided by embodiments of the present disclosure may also be performed by a server or server cluster different from the server 105 and capable of communicating with the devices 101, 102, 103 and/or the server 105. Accordingly, the federated learning apparatus provided by embodiments of the present disclosure may also be provided in a server or server cluster different from the server 105 and capable of communicating with the devices 101, 102, 103 and/or the server 105.

It should be understood that the number of devices, network and server shown in FIG. 1 are merely schematic. According to implementation needs, any number of devices, networks and servers may be provided.

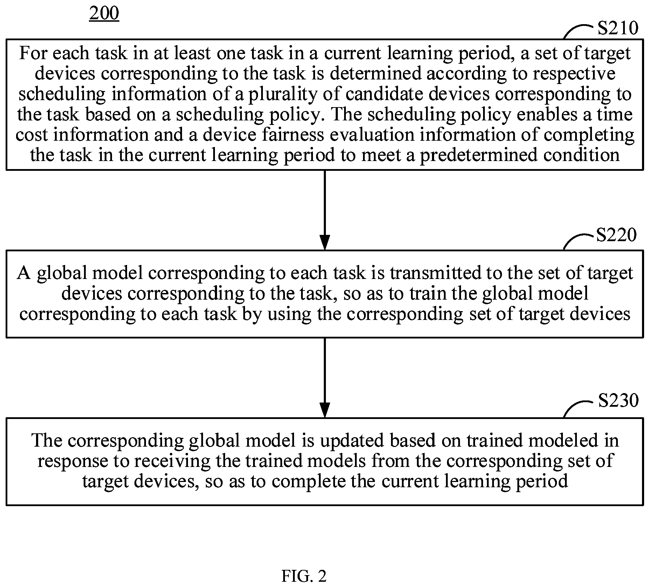

FIG. 2 schematically shows a flowchart of a federated learning method according to embodiments of the present disclosure.

As shown in FIG. 2, a method 200 includes operation S210 to operation S230.

In operation S210, for each task in at least one task in a current learning period, a set of target devices corresponding to the task is determined according to respective scheduling information of a plurality of candidate devices corresponding to the task based on a scheduling policy. The scheduling policy enables a time cost information and a device fairness evaluation information of completing the task in the current learning period to meet a predetermined condition.

In operation S220, a global model corresponding to each task is transmitted to the set of target devices corresponding to the task, so as to train the global model corresponding to each task by using the corresponding set of target devices.

In operation S230, the corresponding global model is updated based on trained models in response to receiving the trained models from the corresponding set of target devices, so as to complete the current learning period.

According to embodiments of the present disclosure, each learning period may refer to a model training round. A plurality of learning periods may exist. The task may refer to a task to be performed. The at least one task may include at least one selected from an image processing task, an audio processing task, or a text processing task. For example, the image processing task may include at least one selected from an image classification, an object detection, a semantic segmentation, or the like. The audio processing task may include a semantic recognition or the like. The text processing task may include at least one selected from a text translation, a text generation, or the like.

According to embodiments of the present disclosure, the plurality of tasks may refer to a plurality of independent tasks. Different tasks have different global models. Each task may correspond to a plurality of learning periods, that is, for each task, a global model that meets an expected performance may be obtained through training of a plurality of learning periods. The expected performance may include at least one selected from: a prediction accuracy being less than or equal to a predetermined accuracy threshold, an output value of a loss function converging, or a number of training rounds reaching a maximum number of training rounds.

According to embodiments of the present disclosure, a plurality of candidate devices may participate in federated learning. Each candidate device may be provided with training data (i.e. local data) corresponding to each task. A scheduling information of the candidate device may be determined according to a resource information of the candidate device and a scheduling-related statistical information. The resource information may include at least one selected from a device hardware resource and a storage data resource. The scheduling-related statistical information may include a statistical value of a number of scheduling times. The statistical value may include an average value or a standard deviation.

According to embodiments of the present disclosure, for each task in the at least one task, the scheduling policy may refer to a policy that enables the time cost information and the device fairness evaluation information for completing the task in the current learning period to meet the predetermined condition. The time cost information may indicate a time cost of training. The time cost information may be represented by a time length information of performing the task.

The device fairness may refer to that different candidate devices may fairly participate in the model training of federated learning. The device fairness evaluation value may be represented by a statistical information related to the scheduling of candidate devices. For example, the statistical information related to the candidate devices may include a statistical value determined according to a number of times the candidate devices are scheduled. Each candidate device may store training data corresponding to each task. Therefore, the data is associated with devices, and a data fairness may be represented by a device fairness. The data fairness may refer to that a plurality of training data may fairly participate in the model training of federated learning.

According to embodiments of the present disclosure, the time cost information and the device fairness evaluation information corresponding to the current learning period may be determined according to the scheduling information of the candidate devices participating in the model training in the current learning period. A performance evaluation information corresponding to the current learning period may be determined according to the time cost information and the device fairness evaluation information corresponding to the current learning period. The performance evaluation information may indicate a training performance of the global model. The training performance may include the convergence efficiency and the convergence accuracy.

According to embodiments of the present disclosure, the plurality of candidate devices may form a plurality of combinations. Accordingly, a plurality of scheduling schemes may be obtained for the current learning period, and each scheduling scheme includes a set of candidate devices corresponding to each task in the at least one task. The predetermined condition may refer to that the performance evaluation information is optimal. The performance evaluation information may be determined according to the device time cost information and the device fairness evaluation information, and the device time cost information and the device fairness evaluation information may be determined according to the scheduling information of the candidate devices participating in the model training in the current learning period. Therefore, the predetermined condition is used as a condition for determining a target scheduling scheme from a plurality of scheduling schemes. The set of candidate devices corresponding to the target scheduling scheme may be referred to as a set of target devices.

According to embodiments of the present disclosure, in the current learning period, for each task in the at least one task, the set of target devices corresponding to the task may be determined according to the respective scheduling information of the plurality of candidate devices corresponding to the task based on the scheduling policy. Then, the sets of target devices for the at least one task may be obtained. Operations of determining the sets of target devices for each task in the at least one task may be performed in parallel.

According to embodiments of the present disclosure, for each task in the at least one task, a global model corresponding to the task may be transmitted to the set of target devices corresponding to the task. Each target device included in the set of target devices may train the global model corresponding to the task by using the training data of the target device, so as to obtain a trained model corresponding to the task. Each target device corresponding to the task may transmit the trained model to the server, and the server aggregates all the trained models corresponding to the task to obtain a new global model corresponding to the task in the current learning period. Then, new global models respectively for all tasks in the current learning period may be obtained. The above-mentioned operations S210 to S230 may be performed repeatedly until a joint training end condition is met.

According to embodiments of the present disclosure, processes of training the global models for the plurality of tasks may be performed asynchronously and in parallel.

According to embodiments of the present disclosure, each candidate device may store training data corresponding to each task. Therefore, data is associated with devices, and a data fairness may be represented by a device fairness. The time cost information may reflect a processing capacity of device. The scheduling policy is a policy that enables the time cost information and the device fairness evaluation information of completing the task of the current learning period to meet the predetermined condition, in which not only the processing capacity of device but also the data fairness are considered. Therefore, it is possible to properly determine a plurality of sets of target devices for a plurality of tasks respectively based on the scheduling policy. On this basis, federated learning of tasks is performed using the sets of target devices corresponding to the tasks, so that the convergence accuracy and the convergence efficiency of global models for multiple tasks may be effectively ensured.

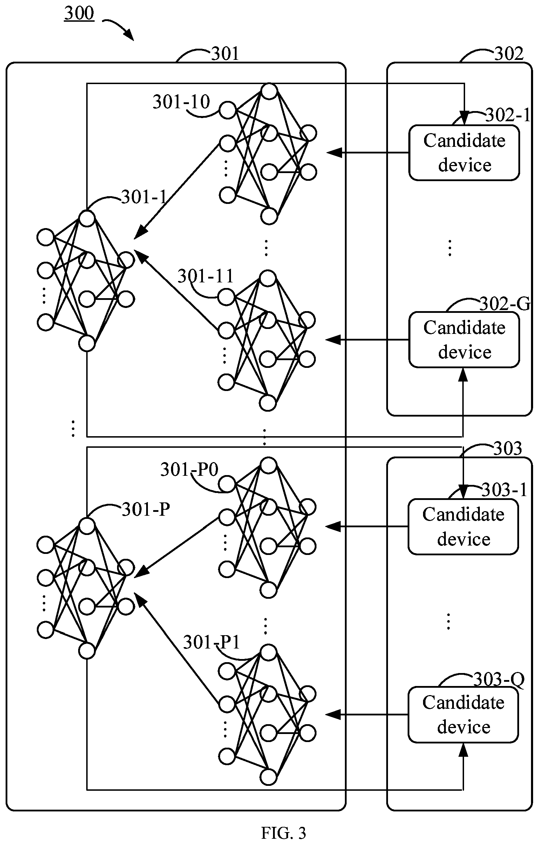

The federated learning method described in embodiments of the present disclosure will be further described with reference to FIG. 3 to FIG. 4 in combination with specific embodiments.

FIG. 3 schematically shows an example schematic diagram of federated learning according to embodiments of the present disclosure.

As shown in FIG. 3, a server 301 and a plurality of candidate devices are provided in 300. The server 301 may store P tasks, and each task may have a corresponding global model. Therefore, there are P global models, including global model 301-1 to global model 301-P. The global model corresponding to a first task is the global model 301-1, and the global model corresponding to a $P^{th}$ task is the global model 301-P.

The set of candidate devices corresponding to the first task is a set of candidate devices 302, and the set of candidate devices corresponding to the $P^{th}$ task is a set of candidate devices 303. The set of candidate devices 302 includes candidate device 302-1 to candidate device 302-G. The set of candidate devices 303 includes candidate device 303-1 to candidate device 303-Q. P and Q are integers greater than or equal to 2.

For example, in the current learning period, for the first task, the server 301 may determine a set of target devices corresponding to the first task according to the respective scheduling information of the set of candidate devices 302 corresponding to the first task based on the scheduling policy. The set of target devices corresponding to the first task includes the candidate device 302-1 and the candidate device 302-G.

The server 301 may transmit the global model 301-1 corresponding to the first task to the set of target devices corresponding to the first task. Since the set of target devices corresponding to the first task includes the candidate device 302-1 and the candidate device 302-G, the global model 301-1 is trained using the candidate device 302-1 and the candidate device 302-G respectively, so as to obtain a trained model 301-10 and a trained model 301-11.

The candidate device 302-1 may transmit the trained model 301-10 to the server 301, and the candidate device 302-G may transmit the trained model 301-11 to the server 301. The server 301 may update the global model 301-1 based on the trained model 301-10 and the trained model 301-11.

For the P$^{th}$ task, the server 301 may determine a set of target devices corresponding to the P$^{th}$ task according to respective scheduling information of the set of candidate devices 303 corresponding to the P$^{th}$ task based on the scheduling policy. The set of target devices corresponding to the P$^{th}$ task includes the candidate device 303-1 and the candidate device 303-Q.

The server 301 may transmit the global model 301-P corresponding to the P$^{th}$ task to the set of target devices corresponding to the P$^{th}$ task. Since the set of target devices corresponding to the P$^{th}$ task includes the candidate device 303-1 and the candidate device 303-Q, the global model 301-P is trained by using the candidate device 303-1 and the candidate device 303-Q respectively, so as to obtain a trained model 301-P0 and a trained model 301-P1.

The candidate device 303-1 may transmit the trained model 301-P0 to the server 301, and the candidate device 303-Q may transmit the trained model 301-P1 to the server 301. The server 301 may update the global model 301-P based on the trained model 301-P0 and the trained model 301-P1.

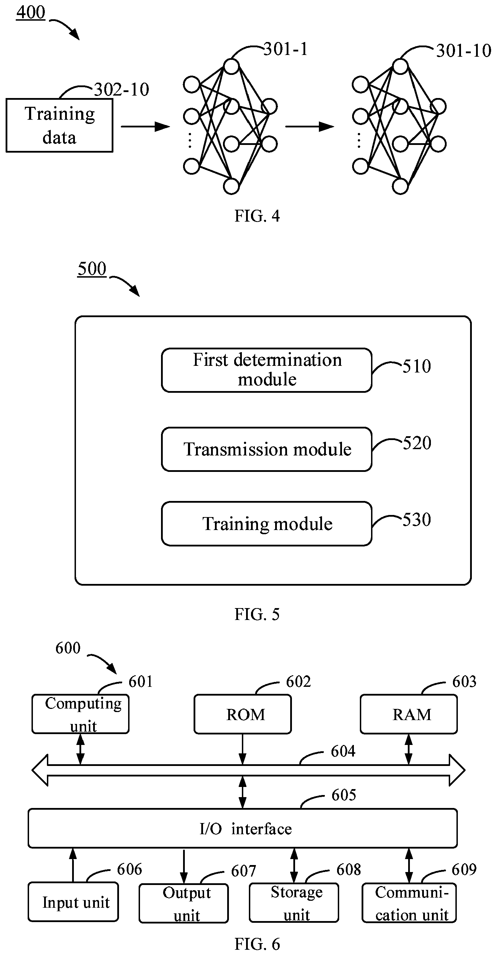

FIG. 4 schematically shows an example schematic diagram of a target device training a global model according to embodiments of the present disclosure.

As shown in FIG. 4, the global model 301-1 is trained by the candidate device 302-1 using training data 302-10, so as to obtain the trained model 301-10.

According to embodiments of the present disclosure, the above-mentioned federated learning method may further include the following operations.

For each candidate device in the plurality of candidate devices corresponding to the task, a time length information of the candidate device performing the task is determined according to a resource information of the candidate device. A number of times the candidate device performed the task in a learning period before the current learning period is determined as a number of scheduling times. The scheduling information of the candidate device is obtained according to the time length information and the number of scheduling times.

According to embodiments of the present disclosure, the resource information may include at least one selected from: a number of CPU (Central Processing Unit), a frequency of CPU, a capacity of memory, a number of GPU (Graphics Processing Unit), an occupation information of computing resources, a data amount of local data, a communication mode, a bandwidth occupation information, or the like. The time length information may include at least one selected from a training time length information or a communication time length information.

According to embodiments of the present disclosure, the learning period before the current learning period may refer to all or some of the learning periods before the current learning period. The number of times that the candidate device performed the task in the learning period before the current learning period may refer to a total number of times that the candidate device was scheduled in the learning period before the current learning period.

According to embodiments of the present disclosure, determining the time length information of the candidate device performing the task according to the resource information of the candidate device may include the following operations.

A computing index of the candidate device is determined according to the resource information of the candidate device. The computing index may indicate a computing capacity of the candidate device. The time length information of the candidate device performing the task is determined by using a predetermined displacement exponential distribution function according to the computing index and the data amount of training data corresponding to the task stored in the candidate device.

According to embodiments of the present disclosure, the computing index may include a maximum value of the computing capacity, a maximum value of the communication capacity, a fluctuation value of the computing capacity, and a fluctuation value of the communication capacity.

According to embodiments of the present disclosure, a computing index $a_k$ and a computing index $\mu_k$ may be determined according to Equation (1) and Equation (2).

$$a_k = \frac{MAC}{f} \qquad (1)$$

$$\mu_k = \frac{1}{a_k} \qquad (2)$$

According to embodiments of the present disclosure, $k$ represents an index of device, $k \in \{1,2,......, K\text{-}1, K\}$, $K$ represents a set of all devices, and $|K|$ represents a number of devices included in the set of all devices. The set of all devices may be a set formed by all devices. $|K|$ is an integer greater than or equal to 2. $MAC$ represents a parameter related to a weight of the global model. $MAC$ is proportional to a number of weights. $f$ represents a frequency of CPU. $a_k$ represents a computing index corresponding to the candidate device $k$, and $a_k$ is in unit of ms/sample. $\mu_k$ represents another computing index corresponding to the candidate device $k$.

According to embodiments of the present disclosure, the time length information of the candidate device performing the task may be determined according to Equation (3).

$$P\left[t_m^k < t\right] = \begin{cases} 1 - e^{-\frac{\mu_k}{\tau_m D_k^m}\left(t - \tau_m a_k D_k^m\right)} & , \quad t \geq \tau_k^m a_k D_k^m \\ 0 & , \quad otherwise \end{cases} \qquad (3)$$

According to embodiments of the present disclosure, $P\left[t_m^k < t\right]$ represents a predetermined displacement exponential distribution function, $D_k^m$ represents a data amount of training data corresponding to task $m$ stored by the candidate device $k$, $\tau_k^m$ represents a number of times that the global model corresponding to the task $m$ is trained by the candidate device $k$, $t_m^k$ represents a time length information of the candidate device $k$ performing the task $m$, and $t$ represents a predetermined time length.

According to embodiments of the present disclosure, the time cost information corresponding to the task is determined according to the time length information of the set of candidate devices corresponding to the task and the time length information of the set(s) of target devices corresponding to all or some of other tasks. The other tasks refers to any task other than the task in the at least one task.

According to embodiments of the present disclosure, the device fairness evaluation information corresponding to the task is determined according to a scheduling balance variance of the set of candidate devices corresponding to the task and a scheduling balance variance of the set(s) of target devices corresponding to all or some of other tasks. The scheduling balance variance is determined according to the number of scheduling times of the devices included in the set of devices, and the set of devices includes the set of candidate devices or the set of target devices.

According to embodiments of the present disclosure, the set of target devices corresponding to the task refers to a set of candidate devices with which the time cost information and the device fairness evaluation information of the task meet the predetermined condition.

According to embodiments of the present disclosure, for each task in the at least one task, the process of determining the set of target devices corresponding to the task may be performed based on a fact that a set of target devices has been determined for any other task respectively.

According to embodiments of the present disclosure, in the process of determining the set of target devices corresponding to the task, the set of candidate devices with which the time cost information and the device fairness evaluation information of the task meet the predetermined condition may be determined as the set of target devices corresponding to the task.

According to embodiments of the present disclosure, for the current learning period, the time cost information corresponding to the task may be determined according to the time length information corresponding to the task and the time length information corresponding to all or some of other tasks. The time length information corresponding to the task may be determined according to the time length information of the set of candidate devices corresponding to the task. For example, a plurality of candidate devices included in the set of candidate devices may have respective time length information, and the time length information corresponding to the task may be a largest time length information among the plurality of time length information.

According to embodiments of the present disclosure, the time length information corresponding to the set of candidate devices corresponding to the task may be determined according to Equation (4).

$$T_m^r\left(V_m^r\right) = \max\left\{t_m^k\right\} \qquad (4)$$

According to embodiments of the present disclosure, $r$ represents a learning period, $V_m^r$ represents a set of candidate devices corresponding to task $m$ in the $r^{th}$ learning period, $T_m^r\left(V_m^r\right)$ represents a time length information corresponding to the set of candidate devices $V_m^r$, $M$ represents a set of all task, $m$ represents an index of task, $m \in \{1,2,......, M\text{-}1, M\}$, $|M|$ represents a number of tasks, and $|M|$ is an integer greater than or equal to 2.

According to embodiments of the present disclosure, the scheduling balance variance may be determined according to the number of scheduling times of the devices included in the set of devices. If the set of devices is a set of target devices, the scheduling balance variance is determined according to the number of scheduling times of the target devices included in the set of target devices. If the set of devices is a set of candidate devices, the scheduling balance variance is determined according to the number of scheduling times of the candidate devices included in the set of candidate devices.

According to embodiments of the present disclosure, the scheduling balance variance corresponding to the set of devices may be determined according to Equation (5).

$$F_m^r\left(V_m^r\right) = \frac{1}{|K|}\sum_{k \in K}\left(s_{k,\ m}^r - \frac{1}{|K|}\sum_{k \in K}s_{k,\ m}^r\right)^2 \qquad (5)$$

According to embodiments of the present disclosure, $F_m^r\left(V_m^r\right)$ represents a scheduling balance variance corresponding to the set of candidate devices $V_m^r$, $s_{k,\ m}^r$ represents a total number of times the candidate device $k$ performed the task $m$ in $(r\text{-}1)$ learning periods before the $r^{th}$ learning period. The candidate device $k$ is a target device $k$ when the predetermined condition is met.

According to embodiments of the present disclosure, a scheduling result of each task may have a potential impact on the scheduling of other tasks. Therefore, the impact of other tasks on the scheduled device for the current task is considered in the time cost information and the device fairness evaluation information. With fully considering the impact of the current scheduling scheme on other tasks, it is possible to more properly schedule device resources for each task, so as to improve the convergence efficiency.

According to embodiments of the present disclosure, operation S210 may further include the following operations.

A scheduling constraint function is determined based on the scheduling policy. A parameter item of the scheduling constraint function includes a time cost item corresponding to the time cost information of each task and a device fairness evaluation item corresponding to the device fairness evaluation information of each task for the current learning period. The set of target devices corresponding to the task is determined using a scheduling algorithm according to the respective scheduling information of the plurality of candidate devices corresponding to the task. The scheduling information of the set of target devices enables a first output value of the scheduling constraint function to meet the predetermined condition.

According to embodiments of the present disclosure, the scheduling constraint function may be determined according to the scheduling policy. The parameter item of the scheduling constraint function may include the time cost item corresponding to the time cost information of each task and the device fairness evaluation item corresponding to the device fairness evaluation information of each task for the current learning period. The time cost evaluation information and the device fairness evaluation information may be determined according to the scheduling information of the set of devices.

According to embodiments of the present disclosure, for each task in the at least one task, the first output value of the scheduling constraint function is determined according to a set of scheduling information of the set of target devices corresponding to each task. One or more scheduling algorithms may be used.

According to embodiments of the present disclosure, the respective scheduling information of the plurality of candidate devices corresponding to the task may be processed using the scheduling algorithm, so that the first output value of the scheduling constraint function meets the predetermined condition. The set of candidate devices corresponding to the task determined when the first output value of the scheduling constraint function meets the predetermined condition is determined as the set of target devices corresponding to the task.

According to embodiments of the present disclosure, the scheduling constraint function may be determined according to Equation (6) to Equation (8).

$$\min\left\{Cost_m^r\left(V_m^r\right)+\sum_{j=1,\ j\neq m}^{M}Cost_j^r\left(V_j^r\right)\right\} \tag{6}$$

$$Cost_m^r\left(V_m^r\right)=\alpha*F_m^r\left(V_m^r\right)+\beta*T_m^r\left(V_m^r\right) \tag{7}$$

$$Cost_j^r\left(V_j^r\right)=\alpha*F_j^r\left(V_j^r\right)+\beta*T_j^r\left(V_j^r\right) \tag{8}$$

According to embodiments of the present disclosure, $V_m^r\in\left\{K\setminus V_o^r\right\}$, $V_o^r$ represents a set of devices that have been scheduled in the $r^{th}$ learning period, $V_o^r=\sum_{j=1,\ j\neq m}^{M}V_j^r$. $K\setminus V_o^r$ represents a plurality of candidate devices corresponding to the task $m$ in the $r^{th}$ learning period, $V_j^r$ represent a set of target devices corresponding to a task $j$ in the $r^{th}$ learning period, $j\in\{1,2,......, M\text{-}1, M\}$, $j\neq m$. A calculation process of Equation (7) and Equation (8) may refer to Equation (1) to Equation (6) described above.

According to embodiments of the present disclosure, the set of target devices may be determined according to Equation (9).

$$V_m^{'r}\leftarrow\min\left\{Cost_m^r\left(V_m^r\right)+\sum_{j=1,\ j\neq m}^{M}Cost_j^r\left(V_j^r\right)\right\} \tag{9}$$

According to embodiments of the present disclosure, $V_m^{'r}$ represents a set of target devices corresponding to the task $m$ in the $r^{th}$ learning period.

According to embodiments of the present disclosure, the scheduling algorithm includes at least one first scheduling algorithm, at least one second scheduling algorithm, and a third scheduling algorithm.

According to embodiments of the present disclosure, determining the set of target devices corresponding to the task by using a scheduling algorithm based on the respective scheduling information of the plurality of candidate devices corresponding to the task may include the following operations.

The scheduling information of the plurality of candidate devices is processed using each first scheduling algorithm in the at least one first scheduling algorithm, so as to obtain a first set of candidate devices corresponding to the task. The scheduling information of the first set of candidate devices enables a second output value of the scheduling constraint function to meet the predetermined condition and to be greater than the first output value. The scheduling information of the plurality of candidate devices is processed using each second scheduling algorithm in the at least one second scheduling algorithm, so as to obtain a second set of candidate devices corresponding to each task in the at least one task. The scheduling information of at least one first set of candidate devices and the scheduling information of at least one second set of candidate devices are processed using the third scheduling algorithm, so as to obtain the set of target devices corresponding to the task.

According to embodiments of the present disclosure, the scheduling algorithm may include a first type of scheduling algorithm, a second type of scheduling algorithm, and the third scheduling algorithm. The first type of scheduling algorithm may be used to determine the first set of candidate devices according to the respective scheduling information of the plurality of candidate devices so that the second input value of the scheduling constraint function meets the predetermined condition. The second type of scheduling algorithm may be used to determine the second set of candidate devices directly according to the respective scheduling information of the plurality of candidate devices.

According to embodiments of the present disclosure, the first type of scheduling algorithm may include one or more first scheduling algorithms. The plurality of first scheduling algorithms may include at least one selected from: Bayesian Optimization (BO) algorithm, Reinforcement Learning (RL) algorithm, Genetic Algorithm (GA), or Greedy Algorithm (GA).

According to embodiments of the present disclosure, the second type of scheduling algorithm may include one or more second scheduling algorithms. The plurality of second scheduling algorithms may include at least one selected from Federated Average (FedAvg) algorithm or federated learning-based heuristic device selection algorithm. The Federated Average algorithm may include a random algorithm. The federated learning-based heuristic device selection algorithm may include FedCS (Client Selection for Federated Leading with Heterogeneous Resources in Mobile Edge) algorithm.

According to embodiments of the present disclosure, for each task in the at least one task, the respective scheduling information of the plurality of candidate devices corresponding to the task may be processed using each first scheduling algorithm in the at least one first scheduling algorithm, so as to obtain a first set of candidate devices with which the second output value of the scheduling constraint function meets the predetermined condition. That is, the respective scheduling information of the plurality of candidate devices corresponding to the task is processed using the first scheduling algorithm to determine the first set of candidate devices from the plurality of candidate devices, so that the second output value of the scheduling constraint function meets the predetermined condition. Therefore, a first set of candidate devices may be obtained in the above manner for each first scheduling algorithm, and thus at least one first set of candidate devices may be obtained.

According to embodiments of the present disclosure, for each second scheduling algorithm in the at least one second scheduling algorithm, the respective scheduling information of the plurality of candidate devices corresponding to the task is processed using the second scheduling algorithm, so as to obtain a second set of candidate devices corresponding to the second scheduling algorithm, and thus obtain at least one second set of candidate devices.

According to embodiments of the present disclosure, after at least one first set of candidate devices and at least one second set of candidate devices are obtained, a set of scheduling information of the at least one first set of candidate devices and a set of scheduling information of the at least one second set of candidate devices may be processed using the third scheduling algorithm, so as to obtain a set of target devices with which the first output value of the scheduling constraint function meets the predetermined condition and the first output value is less than the second output value.

For example, in the $r^{th}$ learning period, for the task $m$, it is possible to solve Equation (6) by using the BO algorithm, the RL algorithm, the genetic algorithm and the greedy algorithm respectively, so as to obtain a first set of candidate devices $V_{BO}^{m,\,r}$ corresponding to the Bayesian optimization algorithm, a first set of candidate devices $V_{RL}^{m,\,r}$ corresponding to the reinforcement learning algorithm, a first set of candidate devices $V_{Genetic}^{m,\,r}$ corresponding to the genetic algorithm, and a first set of candidate devices $V_{Greedy}^{m,\,r}$ corresponding to the greedy algorithm.

The respective scheduling information of the plurality of sets of candidate devices corresponding to the task $m$ is processed using the FedCS algorithm and the Random algorithm respectively, so as to obtain a second set of candidate devices $V_{FedCS}^{m,\,r}$ corresponding to the FedCS algorithm and a second set of candidate devices $V_{Random}^{m,\,r}$ corresponding to the Random algorithm.

A set of target devices corresponding to the task $m$ that meets Equation (6) may be selected from $\Theta_m^r$ by

using the third scheduling algorithm, $\Theta_m^r = \left\{ V_{BO}^{m,\ r},\quad V_{RL}^{m,\ r},\quad V_{Genetic}^{m,\ r},\quad V_{Greedy}^{m,\ r},\quad V_{FedCS}^{m,\ r},\quad V_{Random}^{m,\ r} \right\}$.

According to embodiments of the present disclosure, operation 210 may include the following operations.

Operations are performed in parallel to obtain the sets of target devices corresponding to each task. The operations include: obtaining a set of target devices corresponding to each task according to the respective scheduling information of a plurality of candidate devices corresponding to each task based on the scheduling policy.

According to embodiments of the present disclosure, the operations of determining the sets of target devices respectively for the plurality of tasks may be performed in parallel without waiting for each other, so that the convergence efficiency may be improved.

According to embodiments of the present disclosure, a number of learning periods may be determined according to Equation (10).

$$\frac{1}{\beta_m^o R_m + \beta_m^1} + \beta_m^2 \leqslant l_m \qquad\qquad (10)$$

According to embodiments of the present disclosure, $\beta_m^o$, $\beta_m^1$ and $\beta_m^2$ are hyper-parameters corresponding to the task $m$. The hyper-parameters relate to a convergence curve of the task $m$. $l_m$ represents an output value of a predetermined loss function. $R_m$ represents a number of learning periods required to achieve the output value of the predetermined loss function.

The above are merely exemplary embodiments, but the present disclosure is not limited thereto. Other federated learning methods known in the art may also be included, as long as the convergence efficiency and the convergence accuracy may be improved.

It should be noted that in the technical solution of the present disclosure, an acquisition, a storage, a use, a processing, a transmission, a provision, a disclosure, and an application of user personal information involved comply with provisions of relevant laws and regulations, take essential confidentiality measures, and do not violate public order and good custom. In the technical solution of the present disclosure, authorization or consent is obtained from the user before the user's personal information is obtained or collected.

FIG. 5 schematically shows a block diagram of a federated learning apparatus according to embodiments of the present disclosure.

As shown in FIG. 5, a federated learning apparatus 500 may include a first determination module 510, a transmission module 520, and a training module 530.

The first determination module 510 may be used to determine, for each task in at least one task in a current learning period, a set of target devices corresponding to the task according to respective scheduling information of a plurality of candidate devices corresponding to the task based on a scheduling policy. The scheduling policy enables a time cost information and a device fairness evaluation information of completing the task in the current learning period to meet a predetermined condition.

The transmission module 520 may be used to transmit a global model corresponding to each task to the set of target devices corresponding to the task, so as to train the global model corresponding to each task by using the corresponding set of target devices.

The training module 530 may be used to update the corresponding global model based on trained models in response to receiving the trained models from the corresponding set of target devices, so as to complete the current learning period.

According to embodiments of the present disclosure, the federated learning apparatus 500 may further include a second determination module, a third determination module, and an obtaining module.

The second determination module may be used to determine, for each candidate device in the plurality of candidate devices corresponding to the task, a time length information of the candidate device performing the task, according to a resource information of the candidate device.

The third determination module may be used to determine a number of times the candidate device performed the task in a learning period before the current learning period as a number of scheduling times.

The obtaining module may be used to obtain the scheduling information of the candidate device according to the time length information and the number of scheduling times.

According to embodiments of the present disclosure, the second determination module may include a first determination sub-module and a second determination sub-module.

The first determination sub-module may be used to determine a computing index of the candidate device according to the resource information of the candidate device. The computing index indicates a computing capacity of the candidate device.

The second determination sub-module may be used to determine, by using a predetermined displacement exponential distribution function, the time length information of the candidate device performing the task, according to the computing index and a data amount of training data corresponding to the task stored in the candidate device.

According to embodiments of the present disclosure, the time cost information corresponding to the task is determined according to the time length information of the set of candidate devices corresponding to the task and the time length information of a set of target devices corresponding to all or some of other tasks, and the other tasks refer to any task other than the task in the at least one task.

According to embodiments of the present disclosure, the device fairness evaluation information corresponding to the task is determined according to a scheduling balance variance of the set of candidate devices corresponding to the task and a scheduling balance variance of the set of target devices corresponding to all or some of the other tasks, the scheduling balance variance is determined according to the number of scheduling times of devices in a set of devices, and the set of devices includes the set of candidate devices or the set of target devices.

According to embodiments of the present disclosure, the set of target devices corresponding to the task is a set of candidate devices with which the time cost information and the device fairness evaluation information of the task meet the predetermined condition.

According to embodiments of the present disclosure, the first determination module 510 may include a third determination sub-module and a fourth determination sub-module.

The third determination sub-module may be used to determine a scheduling constraint function based on the scheduling policy. A parameter item of the scheduling constraint function includes a time cost item corresponding to the time cost information of each task and a device fairness evaluation item corresponding to the device fairness evaluation information of each task for the current learning period.

The fourth determination sub-module may be used to determine, by using a scheduling algorithm, the set of target devices corresponding to the task, according to the respective scheduling information of the plurality of candidate devices corresponding to the task. The scheduling information of the set of target devices enables a first output value of the scheduling constraint function to meet the predetermined condition.

According to embodiments of the present disclosure, the scheduling algorithm includes at least one first scheduling algorithm, at least one second scheduling algorithm, and a third scheduling algorithm.

According to embodiments of the present disclosure, the fourth determination sub-module may include a first obtaining unit, a second obtaining unit, and a third obtaining unit.

The first obtaining unit may be used to process the scheduling information of the plurality of candidate devices by using each first scheduling algorithm in the at least one first scheduling algorithm, so as to obtain a first set of candidate devices corresponding to the task. The scheduling information of the first set of candidate devices enables a second output value of the scheduling constraint function to meet the predetermined condition and to be greater than the first output value.

The second obtaining unit may be used to process the scheduling information of the plurality of candidate devices by using each second scheduling algorithm in the at least one second scheduling algorithm, so as to obtain a second set of candidate devices corresponding to each task in the at least one task.

The third obtaining unit may be used to process the scheduling information of at least one first set of candidate devices and at least one second set of candidate devices by using the third scheduling algorithm, so as to obtain the set of target devices corresponding to the task.

According to embodiments of the present disclosure, the at least one first scheduling algorithm includes at least one selected from: a Bayesian optimization algorithm, a reinforcement learning algorithm, a genetic algorithm, or a greedy algorithm.

According to embodiments of the present disclosure, the at least one second scheduling algorithm includes at least one selected from: a federated average algorithm, or a federated learning-based heuristic device selection algorithm.

According to embodiments of the present disclosure, the first determination module 510 may include a parallel performing sub-module.

The parallel performing sub-module may be used to perform operations in parallel to obtain the set of target devices corresponding to each task. The operations include: obtaining the set of target devices corresponding to each task according to the respective scheduling information of the plurality of candidate devices corresponding to the task based on the scheduling policy.

According to embodiments of the present disclosure, the present disclosure further provides an electronic device, a readable storage medium, and a computer program product.

According to embodiments of the present disclosure, an electronic device is provided, including: at least one processor; and a memory communicatively connected to the at least one processor. The memory stores instructions executable by the at least one processor, and the instructions, when executed by the at least one processor, cause the at least one processor to implement the method described above.

According to embodiments of the present disclosure, a non-transitory computer-readable storage medium having computer instructions therein is provided, and the computer instructions are configured to cause a computer to implement the method described above.

According to embodiments of the present disclosure, a computer program product containing a computer program is provided, and the computer program, when executed by a processor, causes the processor to implement the method described above.

FIG. 6 schematically shows a block diagram of an electronic device suitable for implementing the federated learning method according to embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device 600 includes a computing unit 601 which may perform various appropriate actions and processes according to a computer program stored in a read only memory (ROM) 602 or a computer program loaded from a storage unit 608 into a random access memory (RAM) 603. In the RAM 603, various programs and data necessary for an operation of the electronic device 600 may also be stored. The computing unit 601, the ROM 602 and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, or a mouse; an output unit 607, such as displays or speakers of various types; a storage unit 608, such as a disk, or an optical disc; and a communication unit 609, such as a network card, a modem, or a wireless communication transceiver. The communication unit 609 allows the electronic device 600 to exchange information/data with other devices through a computer network such as Internet and/or various telecommunication networks.

The computing unit 601 may be various general-purpose and/or dedicated processing assemblies having processing and computing capabilities. Some examples of the computing units 601 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 601 executes various methods and steps described above, such as the federated learning method. For example, in some embodiments, the federated learning method may be implemented as a computer software program which is tangibly embodied in a machine-readable medium, such as the storage unit 608. In some embodiments, the computer program may be partially or entirely loaded and/or installed in the electronic device 600 via the ROM 602 and/or the communication unit 609. The computer program, when loaded in the RAM 603 and executed by the computing unit 601, may execute one or more steps in the federated learning method described above. Alternatively, in other embodiments, the computing unit 601 may be configured to perform the federated learning method by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device.

The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1. A federated learning method, comprising:

   determining (S210), for each task in at least one task in a current learning period, a set of target devices corresponding to the task according to respective scheduling information of a plurality of candidate devices (302-1, 302-G, 303-1, 303-G) corresponding to the task based on a scheduling policy, wherein the scheduling policy enables a time cost information and a device fairness evaluation information of completing the task in the current learning period to meet a predetermined condition;
   transmitting (S220) a global model (301-1, 301-P) corresponding to each task to the set of target devices corresponding to the task, so as to train the global model (301-1, 301-P) corresponding to each task by using the corresponding set of target devices; and
   updating (S230) the corresponding global model (301-1, 301-P) based on trained models (301-10, 301-11, 301-P0, 301-P1) in response to receiving the trained models (301-10, 301-11, 301-P0, 301-P1) from the corresponding set of target devices, so as to complete the current learning period.

2. The method according to claim 1, further comprising:

   determining, for each candidate device in the plurality of candidate devices (302-1, 302-G, 303-1, 303-G) corresponding to the task, a time length information of the candidate device (302-1, 302-G, 303-1, 303-G) performing the task, according to a resource information of the candidate device (302-1, 302-G, 303-1, 303-G);

determining a number of times the candidate device (302-1, 302-G, 303-1, 303-G) performed the task in a learning period before the current learning period as a number of scheduling times; and

obtaining the scheduling information of the candidate device (302-1, 302-G, 303-1, 303-G) according to the time length information and the number of scheduling times.

3. The method according to claim 2, wherein the determining a time length information of the candidate device (302-1, 302-G, 303-1, 303-G) performing the task, according to a resource information of the candidate device (302-1, 302-G, 303-1, 303-G) comprises:

determining a computing index of the candidate device (302-1, 302-G, 303-1, 303-G) according to the resource information of the candidate device (302-1, 302-G, 303-1, 303-G), wherein the computing index indicates a computing capacity of the candidate device (302-1, 302-G, 303-1, 303-G); and

determining, by using a predetermined displacement exponential distribution function, the time length information of the candidate device (302-1, 302-G, 303-1, 303-G) performing the task, according to the computing index and a data amount of training data (302-10) corresponding to the task stored in the candidate device (302-1, 302-G, 303-1, 303-G).

4. The method according to claim 2 or 3, wherein the time cost information corresponding to the task is determined according to the time length information of the set (302, 303) of candidate devices (302-1, 302-G, 303-1, 303-G) corresponding to the task and the time length information of a set of target devices corresponding to all or some of other tasks, and the other tasks refer to any task other than the task in the at least one task;

wherein the device fairness evaluation information corresponding to the task is determined according to a scheduling balance variance of the set (302, 303) of candidate devices (302-1, 302-G, 303-1, 303-G) corresponding to the task and a scheduling balance variance of the set of target devices corresponding to all or some of the other tasks, the scheduling balance variance is determined according to the number of scheduling times of devices in a set of devices, and the set of devices comprises the set (302, 303) of candidate devices (302-1, 302-G, 303-1, 303-G) or the set of target devices; and

wherein the set of target devices corresponding to the task is a set (302, 303) of candidate devices (302-1, 302-G, 303-1, 303-G) with which the time cost information and the device fairness evaluation information of the task meet the predetermined condition.

5. The method according to claim 4, wherein the determining (S210) a set of target devices corresponding to the task according to respective scheduling information of a plurality of candidate devices (302-1, 302-G, 303-1, 303-G) corresponding to the task based on a scheduling policy comprises:

determining a scheduling constraint function based on the scheduling policy, wherein a parameter item of the scheduling constraint function comprises a time cost item corresponding to the time cost information of each task and a device fairness evaluation item corresponding to the device fairness evaluation information of each task for the current learning period; and

determining, by using a scheduling algorithm, the set of target devices corresponding to the task, according to the respective scheduling information of the plurality of candidate devices (302-1, 302-G, 303-1, 303-G) corresponding to the task, wherein the scheduling information of the set of target devices enables a first output value of the scheduling constraint function to meet the predetermined condition.

6. The method according to claim 5, wherein the scheduling algorithm comprises at least one first scheduling algorithm, at least one second scheduling algorithm, and a third scheduling algorithm;

wherein the determining, by using a scheduling algorithm, the set of target devices corresponding to the task, according to the respective scheduling information of the plurality of candidate devices (302-1, 302-G, 303-1, 303-G) corresponding to the task comprises:

processing the scheduling information of the plurality of candidate devices (302-1, 302-G, 303-1, 303-G) by using each first scheduling algorithm in the at least one first scheduling algorithm, so as to obtain a first set of candidate devices corresponding to the task, wherein the scheduling information of the first set of candidate devices enables a second output value of the scheduling constraint function to meet the predetermined condition and to be greater than the first output value;

processing the scheduling information of the plurality of candidate devices (302-1, 302-G, 303-1, 303-G) by using each second scheduling algorithm in the at least one second scheduling algorithm, so as to obtain a second set of candidate devices corresponding to each task in the at least one task; and

processing the scheduling information of at least one first set of candidate devices and at least one second set of candidate devices by using the third scheduling algorithm, so as to obtain the set of target devices corresponding to the task.

7. The method according to claim 6, wherein the at least one first scheduling algorithm comprises at least one selected from: a Bayesian optimization algorithm, a reinforcement learning algorithm, a genetic algorithm, or a greedy algorithm;

wherein the at least one second scheduling algorithm comprises at least one selected from: a federated average algorithm, or a federated learning-based heuristic device selection algorithm.

8. The method according to any one of claims 1 to 4, wherein the determining (S210), for each task in at least one task, a set of target devices corresponding to the task according to respective scheduling information of a plurality of candidate devices (302-1, 302-G, 303-1, 303-G) corresponding to the task based on a scheduling policy comprises: performing operations in parallel to obtain the set of target devices corresponding to each task, wherein the operations comprise:

obtaining the set of target devices corresponding to each task according to the respective scheduling information of the plurality of candidate devices (302-1, 302-G, 303-1, 303-G) corresponding to the task based on the scheduling policy.

9. A federated learning apparatus, comprising:

a first determination module (510) configured to determine, for each task in at least one task in a current learning period, a set of target devices corresponding to the task according to respective scheduling information of a plurality of candidate devices corresponding to the task based on a scheduling policy, wherein the scheduling policy enables a time cost information and a device fairness evaluation information of completing the task in the current learning period to meet a predetermined condition;

a transmission module (520) configured to transmit a global model corresponding to each task to the set of target devices corresponding to the task, so as to train the global model corresponding to each task by using the corresponding set of target devices; and

a training module (530) configured to update the corresponding global model based on trained models in response to receiving the trained models from the corresponding set of target devices, so as to complete the current learning period.

10. The apparatus according to claim 9, further comprising:

a second determination module configured to determine, for each candidate device in the plurality of candidate devices corresponding to the task, a time length information of the candidate device performing the task, according to a resource information of the candidate device;

a third determination module configured to determine a number of times the candidate device performed the task in a learning period before the current learning period as a number of scheduling times; and

an obtaining module configured to obtain the scheduling information of the candidate device according to the time length information and the number of scheduling times.

11. The apparatus according to claim 10, wherein the second determination module comprises:

a first determination sub-module configured to determine a computing index of the candidate device according to the resource information of the candidate device, wherein the computing index indicates a computing capacity of the candidate device; and

a second determination sub-module configured to determine, by using a predetermined displacement exponential distribution function, the time length information of the candidate device performing the task, according to the computing index and a data amount of training data corresponding to the task stored in the candidate device.

12. The apparatus according to claim 10 or 11, wherein the time cost information corresponding to the task is determined according to the time length information of the set of candidate devices corresponding to the task and the time length information of a set of target devices corresponding to all or some of other tasks, and the other tasks refer to any task other than the task in the at least one task;

wherein the device fairness evaluation information corresponding to the task is determined according to a scheduling balance variance of the set of candidate devices corresponding to the task and a scheduling balance variance of the set of target devices corresponding to all or some of the other tasks, the scheduling balance variance is determined according to the number of scheduling times of devices in a set of devices, and the set of devices comprises the set of candidate devices or the set of target devices; and

wherein the set of target devices corresponding to the task is a set of candidate devices with which the time cost information and the device fairness evaluation information of the task meet the predetermined condition,

preferably, wherein the first determination module (510) comprises:

a third determination sub-module configured to determine a scheduling constraint function based on the scheduling policy, wherein a parameter item of the scheduling constraint function comprises a time cost item corresponding to the time cost information of each task and a device fairness evaluation item corresponding to the device fairness evaluation information of each task for the current learning period; and

a fourth determination sub-module configured to determine, by using a scheduling algorithm, the set of target devices corresponding to the task, according to the respective scheduling information of the plurality of candidate devices corresponding to the task, wherein the scheduling information of the set of target devices enables a first output value of the scheduling constraint function to meet the predetermined condition,

preferably, wherein the scheduling algorithm comprises at least one first scheduling algorithm, at least one second scheduling algorithm, and a third scheduling algorithm;

wherein the fourth determination sub-module comprises:

a first obtaining unit configured to process the scheduling information of the plurality of candidate devices by using each first scheduling algorithm in the at least one first scheduling algorithm, so as to obtain a first set of candidate devices corresponding to the task, wherein the scheduling information of the first set of candidate devices enables a second output value of the scheduling constraint function to meet the predetermined condition and to be greater than the first output value;

a second obtaining unit configured to process the scheduling information of the plurality of candidate devices by using each second scheduling algorithm in the at least one second scheduling algorithm, so as to obtain a second set of candidate devices corresponding to each task in the at least one task; and

a third obtaining unit configured to process the scheduling information of at least one first set of candidate devices and at least one second set of candidate devices by using the third scheduling algorithm, so as to obtain the set of target devices corresponding to the task,

preferably, wherein the at least one first scheduling algorithm comprises at least one selected from: a Bayesian optimization algorithm, a reinforcement learning algorithm, a genetic algorithm, or a greedy algorithm;

wherein the at least one second scheduling algorithm comprises at least one selected from: a federated average algorithm, or a federated learning-based heuristic device selection algorithm,

preferably, wherein the first determination module (510) comprises:

a parallel performing sub-module configured to perform operations in parallel to obtain the set of target devices corresponding to each task, wherein the operations comprise:

obtaining the set of target devices corresponding to each task according to the respective scheduling information of the plurality of candidate devices corresponding to the task based on the scheduling policy.

13. An electronic device (600), comprising:

at least one processor; and

a memory communicatively connected to the at least one processor, wherein the memory stores instructions executable by the at least one processor, and the instructions, when executed by the at least one processor, cause the at least one processor to implement the method of any one of claims 1 to 8.

14. A non-transitory computer-readable storage medium having computer instructions therein, wherein the computer instructions are configured to cause a computer to implement the method of any one of claims 1 to 8.

15. A computer program product containing a computer program, wherein the computer program, when executed by a processor, causes the processor to implement the method of any one of claims 1 to 8.

FIG. 1

<u>200</u>

S210

For each task in at least one task in a current learning period, a set of target devices corresponding to the task is determined according to respective scheduling information of a plurality of candidate devices corresponding to the task based on a scheduling policy. The scheduling policy enables a time cost information and a device fairness evaluation information of completing the task in the current learning period to meet a predetermined condition

S220

A global model corresponding to each task is transmitted to the set of target devices corresponding to the task, so as to train the global model corresponding to each task by using the corresponding set of target devices

S230

The corresponding global model is updated based on trained modeled in response to receiving the trained models from the corresponding set of target devices, so as to complete the current learning period

FIG. 2

FIG. 3

400

302-10

Training
data

301-1

301-10

FIG. 4

500

First determination
module

510

Transmission module

520

Training module

530

FIG. 5

600

601
Computing
unit

602
ROM

603
RAM

604

605
I/O interface

606
Input unit

607
Output
unit

608
Storage
unit

609
Communi-
cation unit

FIG. 6

Europäisches
Patentamt

European
Patent Office

Office européen
des brevets

# EUROPEAN SEARCH REPORT

Application Number

EP 22 20 8146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 113 516 250 A (BEIJING BAIDU NETCOM SCI & TECH CO LTD) 19 October 2021 (2021-10-19) * abstract * * page 1, line 24 – page 2, line 3 * * page 2, line 6 – line 9 * * page 6, line 25 – line 26 * * page 16, line 6 – line 14 * * page 20, line 26 – page 21, line 4 * * page 22, line 15 – line 20 * * page 8, line 14 – line 19 * * claims 1,2 * * figure 2 * ----- | 1-15 | INV. G06N20/00 G06N3/123 G06N7/01 |
| Y | CN 113 094 180 A (SUZHOU LIANDIAN ENERGY DEV CO LTD) 9 July 2021 (2021-07-09) * abstract * * page 1, line 17 – page 3, line 4 * * page 9, line 13 – page 11, line 2 * * page 12, line 1 – page 13, line 6 * ----- | 1-15 | |
| A | TIANSHENG HUANG ET AL: "An Efficiency-boosting Client Selection Scheme for Federated Learning with Fairness Guarantee", ARXIV.ORG, CORNELL UNIVERSITY LIBRARY, 201 OLIN LIBRARY CORNELL UNIVERSITY ITHACA, NY 14853, 21 May 2021 (2021-05-21), XP081951623, DOI: 10.1109/TPDS.2020.3040887 * abstract * * Section 1.3 * * Section 4.1.1 * * Section 4.1.2 * ----- | 1-15 | TECHNICAL FIELDS SEARCHED (IPC) G06N |
| A | CN 112 508 205 A (SHENZHEN INST OF ADV TECH CAS) 16 March 2021 (2021-03-16) * the whole document * ----- | 1-15 | |

The present search report has been drawn up for all claims

| Place of search | Date of completion of the search | Examiner |
|---|---|---|
| Berlin | 21 February 2023 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 20 8146

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2023

| Patent document cited in search report | | Publication date | Patent family member(s) | | Publication date |
|---|---|---|---|---|---|
| CN 113516250 | A | 19-10-2021 | CN | 113516250 A | 19-10-2021 |
| | | | GB | 2610297 A | 01-03-2023 |
| | | | JP | 2022137182 A | 21-09-2022 |
| | | | US | 2022366320 A1 | 17-11-2022 |
| CN 113094180 | A | 09-07-2021 | NONE | | |
| CN 112508205 | A | 16-03-2021 | CN | 112508205 A | 16-03-2021 |
| | | | WO | 2022116323 A1 | 09-06-2022 |

EPO FORM P0459

For more details about this annex : see Official Journal of the European Patent Office, No. 12/82